# EUROPEAN PATENT SPECIFICATION

(11) **EP 4 636 162 B1**
(45) Date of publication and mention of the grant of the patent: **23.09.2026**
(21) Application number: 25168376.9
(22) Date of filing: 03.04.2025
(51) Int. Cl.: E02B 17/02, E04H 12/10, E04H 12/34, E02D 27/42, E02B 17/00

(54) **CONSTRUCTION OF JACKET WIND TURBINE FOUNDATIONS**
KONSTRUKTION VON MANTELWINDTURBINENFUNDAMENTEN
CONSTRUCTION DE FONDATIONS D'ÉOLIENNE À CHEMISE

(30) Priority: 16.04.2024 GB 202405378
(43) Date of publication of application: 22.10.2025
(73) Proprietor: Aker Solutions AS, 1325 Lysaker (NO)
(72) Inventor: REBERG, Andreas, 7630 Åsen (NO)
(74) Representative: HGF

(56) References cited:
- CN-A- 113 146 109

## Description

The present disclosure relates to construction of jacket wind turbine foundations.

### BACKGROUND

Bottom-fixed offshore wind turbine power plant technology has established itself as a viable option for electric power generation, and the recent years have seen a number of large plants being established. In such systems, the wind turbine is supported at the sea floor via a foundation, which typically is a monopole or a jacket foundation. Bottom-fixed offshore wind turbine power plants can be attractive over land-based systems among other things due to the often better wind conditions offshore, thereby yielding higher production, and through less conflict for land usage.

Manufacturing and installation of the foundation make up a considerable part of the capital cost (capex) of a bottom-fixed wind turbine power plant. Efficient methods for manufacturing and installation are required in order to further improve the competitiveness of bottom-fixed offshore wind turbine power plant technology.

Publications which may be useful to understand the field of technology include: CN 113 146 109 A, showing the features of the preamble of claim 1, and WO 2022/144471 A1; WO 2021/164953 A1; and CN 115539310 A.

With a projected continued increase in the need for renewable electric power generation in the future, there is a need for further improved technology in this area. The present disclosure has the objective to provide such improvements, or at least useful alternatives, to the current state of the art.

### SUMMARY

In accordance with claim 1, there is provided a method of constructing a jacket foundation for a wind power plant, the method comprising: preparing a first part by providing a first leg section and positioning the first leg section at a plurality of first supports at a construction site, providing a second leg section and positioning the second leg section at a plurality of second supports at the construction site, and fixing a plurality of first braces between the first and second leg sections; preparing a second part by providing a third leg section and positioning the third leg section on an elevated support structure at the construction site, and fixing a plurality of second and third braces to the third leg section, the second and third braces extending from the third leg section downwardly at opposite sides of the elevated support structure; lifting the second part off the elevated support structure and onto the first part, and connecting the first part to the second part by fixing the plurality of second braces to the first leg section and fixing the plurality of third braces to the second leg section.

In an example, there is provided a method, not claimed, of constructing a jacket foundation for a wind power plant, the method comprising: positioning a first leg section, a second leg section and a third leg section horizontally at a construction site, the first and third leg sections being arranged at opposite sides of the second leg section; fixing a plurality of first braces to the first leg section; fixing a plurality of second braces between the first and second leg sections; with the first and second braces fixed to the first leg section and the second braces fixed to the first and second legs, pivoting the first leg section and the first and second braces about the second leg section to bring the first braces into engagement with the third leg section; fixing the first braces to the third leg section; and fixing a plurality of third braces between the second and third leg sections.

In an example, there is provided a method, not claimed, of constructing a three-legged jacket foundation for a wind power plant, the method comprising: providing first, second and third leg sections and first, second and third braces at a construction site; fixing each of the braces between respective leg sections such as to produce an elongate foundation part having a substantially triangular cross-sectional shape in a horizontal plane; with at least two of the leg sections arranged horizontally at or adjacent a floor of the construction site, fixing a transition piece to an end section of the foundation part.

The detailed description below and the appended claims outline further inventive aspects and embodiments.

### BRIEF DESCRIPTION OF THE DRAWINGS

The above and other characteristics will become clear from the following description of illustrative, non-restrictive examples, with reference to the attached drawings, in which:
Fig. 1 is a perspective view of a portion of a foundation construction site, showing a plurality of first and second supports.
Fig. 2 is an illustrative view of the foundation construction site showing a first leg section positioned on the first supports at the construction site.
Fig. 3 is an illustrative view of the foundation construction site showing a second leg section supported on the second supports, with a plurality of first braces fixed between the second leg section and the first leg section to form a first part.
Fig. 4 is an illustrative view of the foundation construction site showing the first part with first and second leg sections with further first braces fixed between the second leg section and the first leg section.
Fig. 5 is an illustrative view of the foundation construction site showing the first and second leg sections with yet further first braces fixed between the second leg section and the first leg section.
Fig. 6 is an illustrative view of the foundation construction site showing an elevated support structure at the construction site.
Fig. 7 is an illustrative view of the foundation construction site showing a third leg section positioned on the elevated support structure.
Fig. 8 is an illustrative view of the foundation construction site showing a second part with a plurality of second and third braces fixed to the third leg section.
Fig. 9 is an illustrative view of the foundation construction site showing the second part with the third leg section lifted onto the first part with the first and second leg sections.
Figs. 10 is an illustrative view of the foundation construction site showing the first and second parts connected, with a transition piece positioned proximal the connected first and second parts.
Fig. 11 is an illustrative view of the foundation construction site showing the transition piece connected to the first and second parts to form a jacket foundation.
Fig. 12 is an illustrative view of the foundation construction site showing the jacket foundation being upended.
Fig. 13 is an illustrative view of the foundation construction site showing the jacket foundation upright.
Fig. 14 is an illustrative view of the foundation construction site showing a plurality of partially completed jacket foundations.
Fig. 15 is an illustrative view of the foundation construction site showing a completed jacket foundation and a partially-completed jacket foundation.
Fig. 16 illustrates construction of a plurality of jacket foundations at the construction site.
Figs 17-26 illustrate a foundation construction site and various steps in a method for constructing a jacket foundation according to other examples.

### DETAILED DESCRIPTION

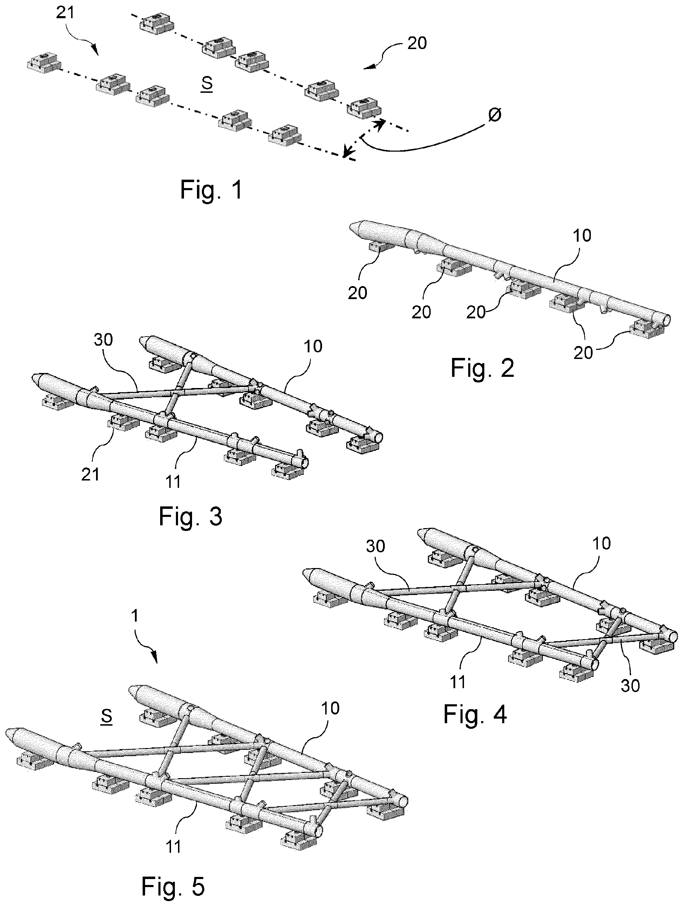

Fig. 1 shows an arrangement of first and second supports 20, 21 at a construction site S. It will be appreciated that the construction S can be a land-based construction site, such as a shoreside yard or industrial site. The first and second supports 20, 21 are for constructing a first part 1 of a jacket foundation 100 for a wind power plant, as outlined below.

The plurality of first supports 20 are linearly arranged at ground level. The plurality of second supports 21 are also linearly arranged at ground level, adjacent the line of first supports 20. Accordingly, as visible in Fig. 1, there are provided two rows of respective first and second supports 20, 21 linearly arranged adjacent each other on the ground of the construction site S. An angle Ø between the line of first supports 20 and the line of second supports 21 corresponds to a taper angle of the assembled jacket foundation 100 when completed. It will be appreciated that the angle Ø can vary with the configuration of the particular jacket foundation 100 being constructed (e.g. from 0° for parallel leg sections 10, 11, 12).

Referring now to Fig. 2, there is shown a first leg section 10 positioned at the plurality of first supports 20 at the construction site S, with the first leg section 10 horizontal. It will be appreciated that an entire length of the first leg section 10 is accessible from the ground, without requiring elevated access. The first leg section 10 is entirely proximal to the ground, separated therefrom merely by a thickness of the first supports 20.

Fig. 3 is an illustrative view of the foundation construction site showing a second leg section 11 supported on the second supports 21 at the construction site S. A plurality of first braces 30 is fixed between the second leg section 11 and the first leg section 10 to form a first part 1, as illustrated sequentially in Figs. 3 through 5. Accordingly, Fig. 4 is an illustrative view of the foundation construction site S showing the formation of the first part 1 with first and second leg sections 10, 11 with further first braces 30 fixed between the second leg section 11 and the first leg section 10.

Fig. 5 is an illustrative view of the foundation construction site S showing the first and second leg sections 10, 11 with yet further first braces 30 fixed between the second leg section 11 and the first leg section 10. As shown in Fig. 5, these further braces 30 are the final first braces 30, positioned intermediate the first braces 30 fixed in the steps shown in Fig. 3 and Fig. 4 respectively. As such, Fig. 5 represents a generally completed first part 1, ready for assembly to form the jacket foundation 100.

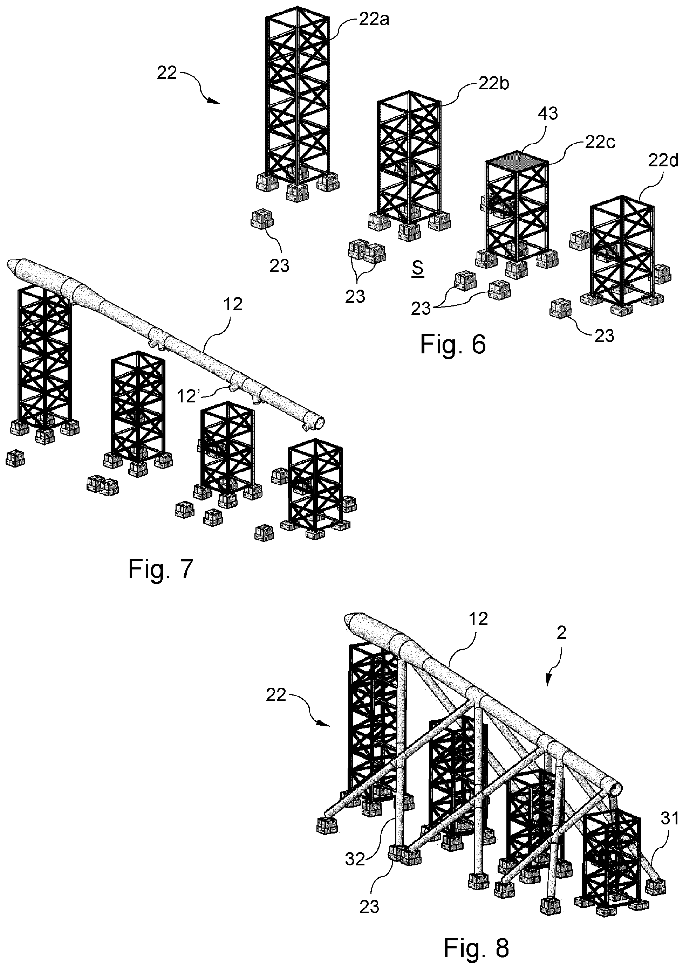

Referring now to Fig. 6, there is shown an illustrative view of the foundation construction site S showing an elevated support structure 22,22a-d at the construction site S. The elevated support structure 22,22a-d comprises at least one work platform 43. Here, there is only a single work platform 43 shown on one portion 22c of the elevated support structure 22, but it will be appreciated that additional work platforms 43 can be comprised in or on other parts of the support structure 22a, 22b, 22d. In at least some examples, there is provided a work platform 43 at each point where access is required. For example, a work platform 43 can be provided at each brace interface. It will also be appreciated that the number of portions or structures 22a-d forming the elevated support structure 22 can correspond to the number of access points required or desired. For example, here there are provided four structure portions 22a-d of the elevated support structure, corresponding to the four access points to be used for connecting braces 31, 32 at four brace interfaces of a third leg section 12, as outlined below. The work platform 43 provides for immediate access to the connection point, such as for welding the braces 31, 32.

As can also be seen in Fig. 6, there is also provided a plurality of third supports 23 at the construction site S. The third supports 23 are positioned relative to the elevated support structure 22, 22a-d, for supporting the second and third braces 31, 32 during fixing, as shown in Fig. 8. It will be appreciated that the supports 23 can be cradles prepared for holding the ends of the braces 31,32.

Referring now to Fig. 7, there is shown an illustrative view of the foundation construction site S showing the third leg section 12 positioned on the elevated support structure 22, 22a-d. Although schematically shown in Fig. 7 with an apparent gap between the third leg section 12 and the elevated support structure 22, 22a-d, it will be appreciated that in actuality the third leg section 12 is resting on the elevated support structure 22, such as upon cradles on each of the respective portions 22a-22d of the elevated support structure 22.

Fig. 8 shows the second part 2 with a plurality of the second and third braces 31, 32 fixed to the third leg section 12. It will be appreciated that the plurality of second and third braces 31,32 can be fixed to the third leg section 12 at least partly from the work platform 43. For example, where each portion 22a-22d of the elevated supported structure 22 comprises a respective work platform 43 (not visible in Fig. 8), then each of the second and third braces 31, 32 can be welded to the second leg section 12 directly from the work platform 43 associated with each respective brace interface on the second leg section 12.

As can clearly be seen in Fig. 8, the second and third braces 31,32 are supported during fixing to the second leg section 12 by resting the plurality of second and third braces 31,32 at the plurality of third supports 23. The third supports 23 here are cradles prepared for holding lower ends of the braces 31,32, with upper ends of the plurality of second and third braces 31,32 also being supported, resting against brace supports 12' at the third leg section 12, while fixing the plurality of second and third braces 31,32 to the third leg section 12. As also clearly visible, the plurality of second and third braces 31,32 extend downwardly from the third leg section 12 at opposite sides of the elevated support structure 22,22a-d, with the plurality of second braces 31 extending downwardly on a far side of the elevated support structure 22,22a-d as viewed in Fig. 8; and the plurality of third braces 32 extending downwardly on a near side of the elevated support structure 22,22a-d as viewed in Fig. 8. As shown here, the elevated support structure 22, 22a-d is tapered overall (e.g. a first end portion 22a is higher than an opposite end portion 22d) such that a top of the third leg section 12 is angled downwards when supported on the elevated support structure 22, 22a-2dd. This taper corresponds to that of the assemble jacket foundation 100. Accordingly, as shown in Fig. 8, the lower ends of all of the second and third braces 31,32 can be supported in third supports 23 that are all at ground level.

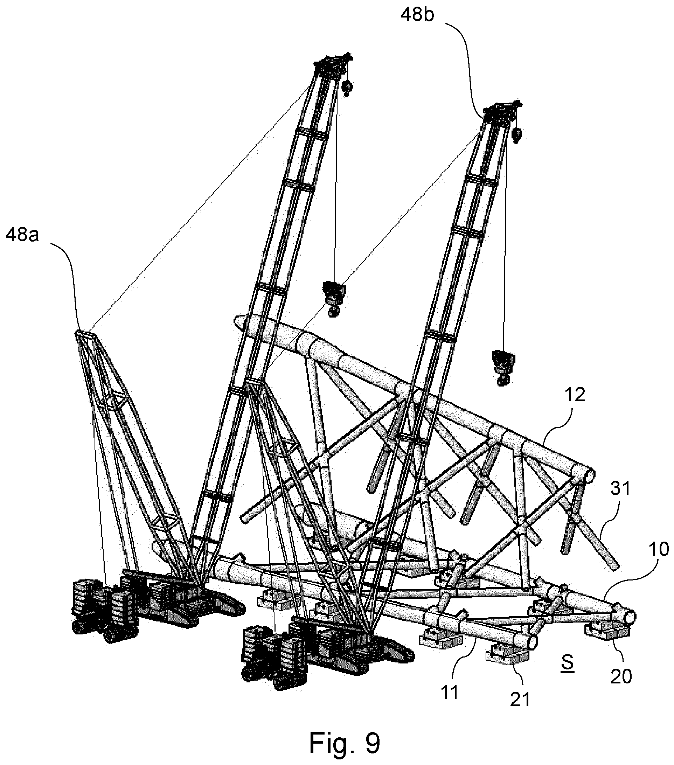

Referring now to Fig. 9, there is shown an illustrative view of the foundation construction site S with the second part 2 with the third leg section 12 being lifted onto the first part 1 with the first and second leg sections 10, 11. It will be appreciated that this assembly step entails the lifting of the second part 2 off the elevated support structure 22,22a-d and onto the first part 1. Here, the lifting of the second part 2 is performed with the second part 2 being translated in a raised position over the first part 1. For example, the second part 2 may be formed on the elevated support structure 22, 22a-d more distal from the cranes 48a, 48b shown in Fig. 9; and manoeuvred towards the first part 1 (e.g. by the cranes 48a, 48b as such). The cranes 48a, 48b can be configured to facilitate pick up of the second part 2 and assembly onto the first part 1, without requiring disassembly and/or reassembly of the elevated support structure 22, 22a-d. The step of lifting the second part 2 off the elevated support structure 22,22a-d and onto the first part 1 is carried out using lifting slings. No dedicated lifting or attachment features are required on the second part 2 for the step shown in Fig. 9. In general, the construction method does not require dedicated lifting points on any of the structure/s 1, 2, 100 (e.g. welded lifting features), but can use lifting slings, which simplifies construction. As can be seen in Fig. 9, the lifting onto the first part 1 of the second part 2 is performed here with the first part 1 resting on the pluralities of first and second supports 20, 21.

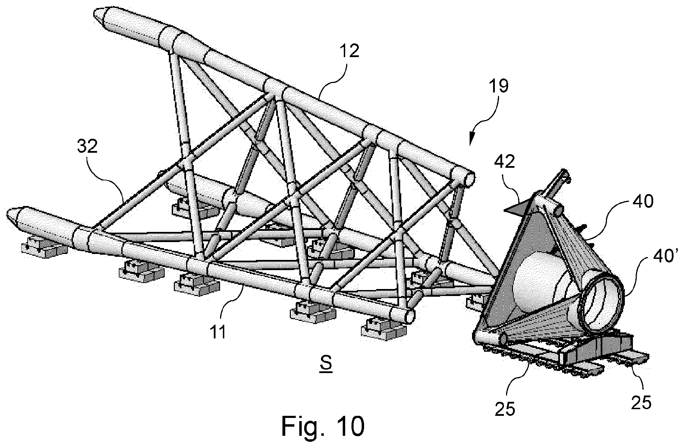

With the second part 2 lifted onto the first part 1, the second part 2 can be connected to the first part 1 as shown in Fig. 10. Referring now to Fig. 10, there is shown an illustrative view of the foundation construction site S showing the first and second parts 1, 2 connected. It will be appreciated that the second part 2 has been connected to the first part 1 by fixing the plurality of second braces 31 to the first leg section 10 and fixing the plurality of third braces 32 to the second leg section 11.

Accordingly, there is provided a method of constructing a jacket foundation 100 for a wind power plant, the method comprising: preparing a first part 1 by providing a first leg section 10 and positioning the first leg section 10 at a plurality of first supports 20 at a construction site S, providing a second leg section 11 and positioning the second leg section 11 at a plurality of second supports 21 at the construction site S, and fixing a plurality of first braces 30 between the first and second leg sections 10,11; preparing a second part 2 by providing a third leg section 12 and positioning the third leg section 12 on an elevated support structure 22,22a-d at the construction site S, and fixing a plurality of second and third braces 31,32 to the third leg section 12, the second and third braces 31,32 extending from the third leg section 12 downwardly at opposite sides of the elevated support structure 22,22a-d; lifting the second part 2 off the elevated support structure 22,22a-d and onto the first part 1, and connecting the first part 1 to the second part 2 by fixing the plurality of second braces 31 to the first leg section 10 and fixing the plurality of third braces 32 to the second leg section 11.

In the example shown here, there is provided a tapered 3-legged offshore wind turbine generator jacket foundation 100.

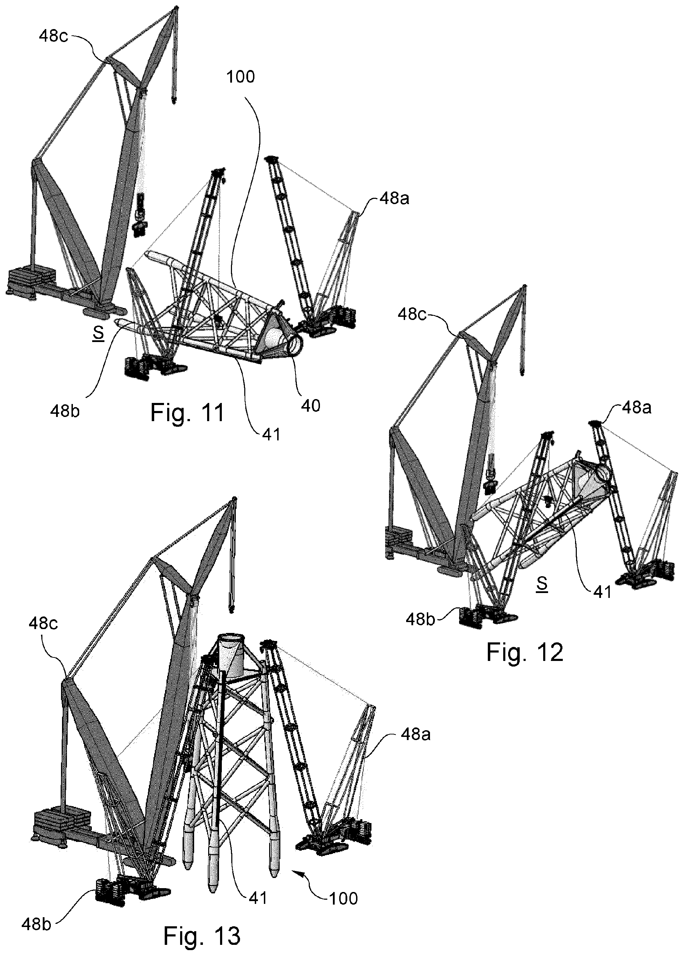

With the arrangement shown in Figs. 9 and 10, it will be appreciated that the plurality of second braces 31 can be fixed to the first leg section 10 and the plurality of third braces 32 fixed to the second leg section 11 without requiring elevated access. For example, the respective pluralities of second and third braces 32, 33 can be fixed, such as welded, whilst working at ground level. Minimising such work at height; and generally working at ground level can improve safety and/or efficiencies. Enabling such access to all of the brace interfaces of the first part 1 at ground level can improve additional operations such as inspections, remediation and further assembly steps, such as an addition of further equipment (see e.g. the pipe/cable structure 41 of Figs. 11 through 13). The construction method here generally increases the welding operations that are carried out at ground level. Accordingly, work at height is hereby reduced. Work at height is generally riskier and less efficient (e.g. requires scaffolding, safety measures) and has generally been mitigated by the present construction method.

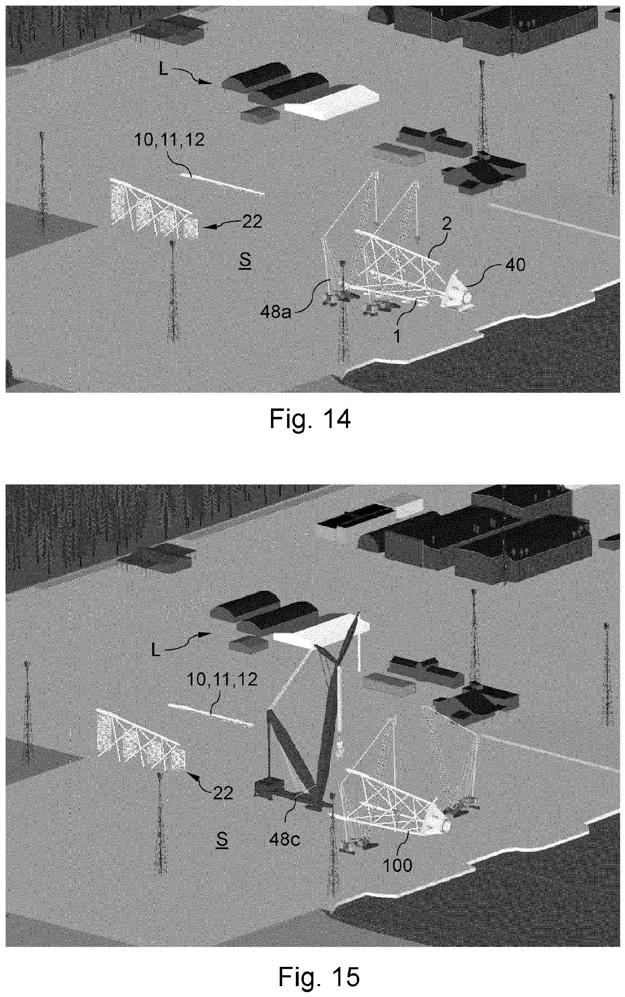

In Fig. 10, there is also shown a transition piece 40 positioned proximal the connected first and second parts 1, 2. As shown here, in Figs 10 through 11, the method comprises fixing the transition piece 40 to an end section 19 of the first and second parts 1,2. It will be appreciated that here the step of fixing the transition piece 40 to the end section 19 comprises fixing the transition piece 40 to an end of each of the first, second and third leg sections 10,11,12. As shown in Fig. 10, the step of fixing the transition piece 40 to the end section 19 comprises moving the transition piece 40 to a position directly adjacent, and ultimately into contact with, the end section 19 by means of at least one self-propelled modular transporter (SPMT) 25. As such, the step of fixing the transition piece 40 is performed without lifting the transition piece 40, such as without lifting the transition piece 40 by suspension from a crane or the like. Accordingly, there is no need for a crane for this operation, potentially freeing up a crane for other operations on site S or elsewhere. Furthermore, it will also be appreciated that the transition piece 40 can be fully constructed elsewhere (e.g. manufactured at a dedicated manufacturing station which can be indoors). Indeed, it will be appreciated that at least one of the leg sections 10,11,12, braces 30,31,32, and/or the transition piece 40 can be manufactured at an indoor location L which is spaced from the construction site S. Accordingly, the construction method can entail moving the at least one of the leg sections 10,11,12, braces 30,31,32, or the transition piece 40 from the indoor location L to the construction site S (see e.g. Figs.14 through 16).

In at least some examples, the transition piece 40 itself can be constructed "standing" in its ordinary orientation and then flipped up onto the SPMT 25. Here, the transition piece 40 has an interface 40' for the wind turbine tower. In other examples, a section of the wind turbine tower (not shown) is pre-mounted to the transition piece 40 prior to or during the steps shown in Fig. 10 or 11.As shown here, the step of fixing the transition piece 40 to the end section 19 is carried out with the first leg section 10 positioned at the plurality of first supports 20 and the second leg section 11 positioned at the plurality of second supports 21.

As visible in Fig. 10, the transition piece 40 here has a work platform 42, in this example a temporary work platform 42, fixed to it. It will be appreciated that the temporary work platform 42 can be scaffolding or the like, such as to provide a welding platform. Advantageously the temporary work platform 42 can be prepared together with the transition piece 40 prior to mounting the transition piece 40 onto the jacket 100 being formed by the assembled first and second parts 1, 2. Accordingly, there is no need to build a scaffolding/welding platform for the transition piece 40 at the assembly site as such.

Accordingly, the step of fixing the transition piece 40 to the end section 19 is carried out at least partly from the temporary work platform 42. For example, the temporary work platform 42 can be used to fix the transition piece 40 to the third leg section 12 by welding the transition piece 40 to the third leg section 12 directly from the temporary work platform 42. Subsequent to fixing the transition piece 40 to the end section 19 of the first and second parts 1,2, the temporary work platform 42 can be removed from the transition piece 40. for example, the temporary work platform 42 can be removed from the transition piece 40 prior to the step of upending the jacket foundation 100, as illustrated in Figs. 11 through 13. Alternatively, the work platform 42 may remain on the jacket foundation 100. The temporary work platform 42 can be dismantled afterwards; and optionally re-used on a next transition piece 40. In general, work platform(s) 42, 43 may comprise re-usable parts and/or equipment, such as welding tents, which can be dismounted and moved to a new position on the construction site S according to the progress of the construction work. These may be standardised in size, attachment interfaces, etc., in order to allow such reuse.

As indicated in Figs. 1 through 13, operations on the foundation 100 may be carried out in sequential and/or parallel steps, where for example lifting in of one brace section 30, 31, 32 is carried out at the same time as another brace section 30, 31, 32 is being fixed (such as welded) between to the leg sections 10, 11, 12. Different operations on the foundation 100 may be carried out concurrently. In this manner, efficient use of equipment and personnel can be achieved.

Referring now to Fig. 11, there is shown an illustrative view of the foundation construction site S showing the transition piece 40 already connected to the first and second parts 1, 2 to form the jacket foundation 100, as outlined above. Fig. 12 shows the jacket foundation 100 being upended and Fig. 13 shows the jacket foundation 100 upright, resulting from the sequence of the steps of Figs. 11 through 13. As shown here in this particular example, the step of upending the jacket foundation 100 is carried out subsequent to the step of fixing the transition piece 40 to the end section 19 of the first and second parts 1,2.

As also shown in Figs. 11 through 13, a longitudinal member or guide 41, such as a pipe or cable structure, has been fixed to the jacket foundation 100 prior to upending. In general, the pipe or cable structure 41 is preferably mounted to the first and/or second part/s 1, 2 at or from ground level. For example, the pipe or cable structure 41 can be mounted to the first leg section 10, the second leg section 11 and/or the plurality of first braces 30. As shown here, the step of mounting the pipe or cable structure 41 to the first part 1 (and/or second part 2 in other examples) is carried out prior to the step of upending the jacket foundation 100. For example, the step of mounting the pipe or cable structure 41 is performed prior to the steps of Figs. 11 and 12; and optionally prior to the step shown in Fig. 10. In at least some examples, the step of mounting the pipe or cable structure 41 is performed with the first leg section 10 positioned at the plurality of first supports 20 (and optionally the second leg section 11 positioned at the plurality of second supports 21).

It will be appreciated that the pipe or cable structure 41 generally comprises one or more of: a cable guide, a pipe guide, at least one pipe, a J-tube. For example, the pipe or cable structure 41 can include a J-tube for pulling in electrical cables or the like to the wind turbine. Additionally, or alternatively, the pipe or cable structure 41 can include pipes for cooling water. In at least some examples, the longitudinal member or guide 41 may comprise a fixation point/s for a pipe or cable structure. For example, the fixation point/s may facilitate later installation of the pipe or cable structure. The method may comprise fixation work for the longitudinal member or guide 41 being performed at ground level, such as when the jacket foundation 100 is lying horizontal, prior to upending to its use configuration.

As shown in Figs.11 through 13, it will be appreciated that again slings can be used for lifting/upending the jacket foundation 100. The method does not require dedicated lifting points on the jacket foundation 100 (e.g. there are no specific lifting features welded to the jacket foundation 100), but can use lifting slings, which generally simplifies construction.

It will be appreciated that the sequentially-numbered Figs 1 to 13 each show a respective stage in a construction of a jacket foundation 100.

Referring now to Fig. 14, there is shown an illustrative view of the foundation construction site S showing components/parts and partially completed jacket foundations 100. Here, there is shown a leg assembly station L, located at the back in the view of Fig. 14. It will be appreciated that each of the first, second and third leg sections 10, 11 and 12 can generally all be similar. In at least some examples, the first, second and third leg sections 10, 11 and 12 are structurally identical or at least interchangeable. There is also shown a construction location for the second parts 2, with the elevated support structure 22, 22a-d in situ. A lifted second part 2 is also shown being installed on a first part 1. Accordingly, in some examples, there can be provided a method of manufacturing a plurality of jacket foundations 100, the method comprising preparing a plurality of first parts 1 in a batch; and preparing a plurality of second parts 2 in a batch. The transition piece 40 is positioned adjacent, ready for installation onto the assembled first and second parts 1, 2 of the jacket foundation 100. The assembled first and second parts 1, 2 forming the jacket foundation 100 are shown in Fig. 15, with the transition piece 40 fixed thereto. There are also shown cranes 48a-c ready for upending the jacket 100. Here, two smaller 48a, b and a single larger crane 48c are shown for combined lifting. In at least some examples, there can be provided a single, central, generally stationary (larger) crane 48c. The plurality of first parts 1 can be arranged around a single central crane 48c and the plurality of second parts 2 can be lifted onto the plurality of first parts 1 sequentially with the single central crane 48c. It will be appreciated that the cranes 48a-c may move when upending the jacket foundation 100 to clear the assembly support arrangement (e.g. the elevated support structure 22, 22a-d).

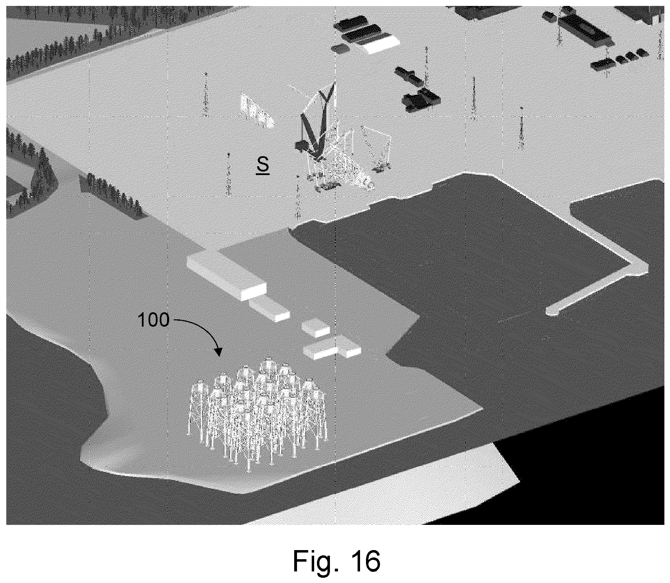

The completed jacket foundation 100 can be set down onto SPMT transport frame for direct transport to storage, for example together with a plurality of other completed jacket foundations such as shown in Fig. 16. Alternatively, the completed jacket foundation 100 can be set down onto a support arrangement (e.g. for subsequent transport to storage and/or to transit to deployment location).

The examples above have been described in relation to a substantially triangular jacket foundation 100. The methods described herein may, however, be equally suitable for other foundation types. The methods described herein may also be applicable for the construction of other types of foundations, for example having a different number of leg sections and/or brace sections, and/or having a different arrangement of the respective sections.

The foundations 100 may be arranged about a crane 48c at the construction site S, such that the foundations 100 are arranged at least partly within operational reach of the crane 48c. The crane 48c may be advantageously rotatable about a vertical axis. The crane 48c may be used, for example, for moving equipment (such as work platforms 42, 43) or other items to the foundations 100. Such equipment or other items may, for example, be provided by self-propelled modular transporters 25 or other means to a position adjacent the crane 48c (such as between two foundations 100). Optionally, the crane 48c may be used to lift equipment or other items off a foundation 100, for example after completion of a construction step (e.g. removing a work platform 42, 43).

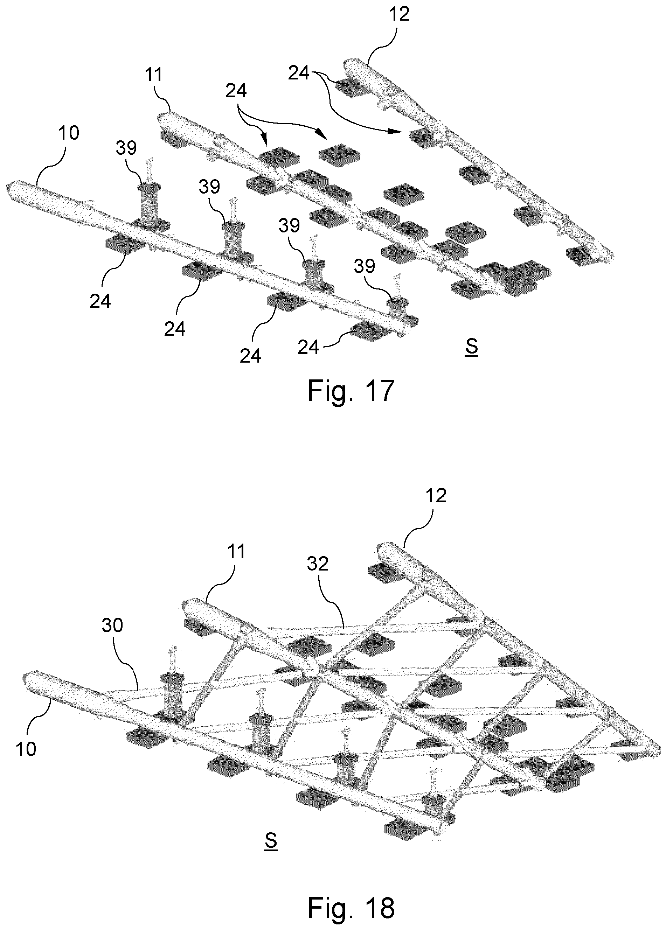

Other embodiments of a method of constructing a jacket foundation 100 are illustrated in relation to Figs 17-26, and will be described in the following. Principles and individual construction steps described above are also applicable to the methods described below.

As illustrated in Fig. 17, a method of constructing a jacket foundation 100 for a wind power plant may include positioning a first leg section 10, a second leg section 11 and a third leg section 12 at a construction site S, for example on supports 24. The first and third leg sections 10,12 are arranged at opposite sides of the second leg section 11.

A plurality of first braces 30 (Fig. 18) are laid out substantially horizontally and fixed to the first leg section 10.

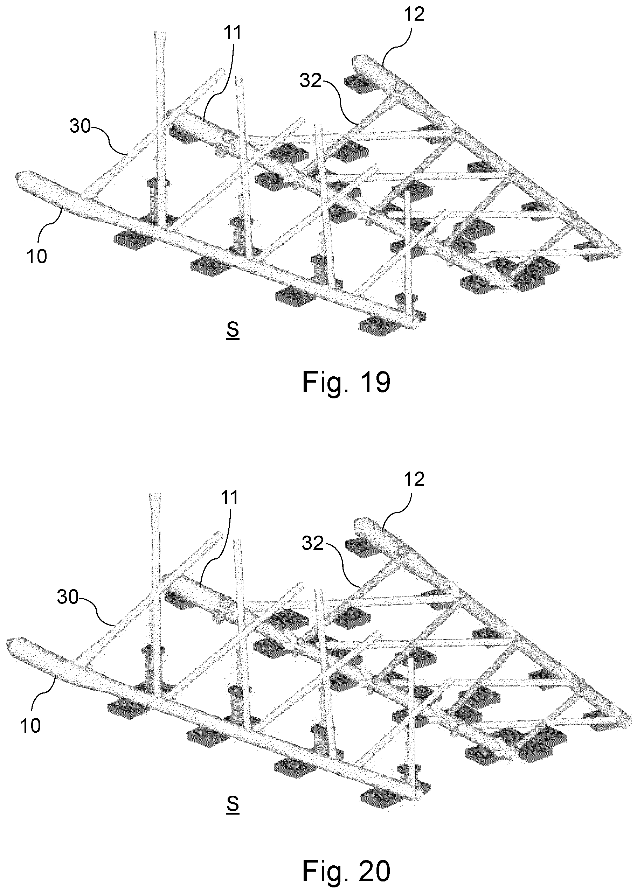

With the first braces 30 fixed to the first leg section 10, these are subsequently pivoted upwardly about the first leg section to the orientation illustrated in Fig. 19. This may involve for example pivoting the first braces 30 approximately 60 degrees upwardly, relative to the horizontal. The construction site S has supports 39 (see Fig. 17) arranged for supporting the first braces 30 in this position. The supports 39 are in this example extendible (such as telescopic), such that the first braces 30 may be pivoted upwardly first, as shown in Fig. 19, and the supports 39 are then extended such as to engage and support the first braces 30 in this orientation (Fig. 20).

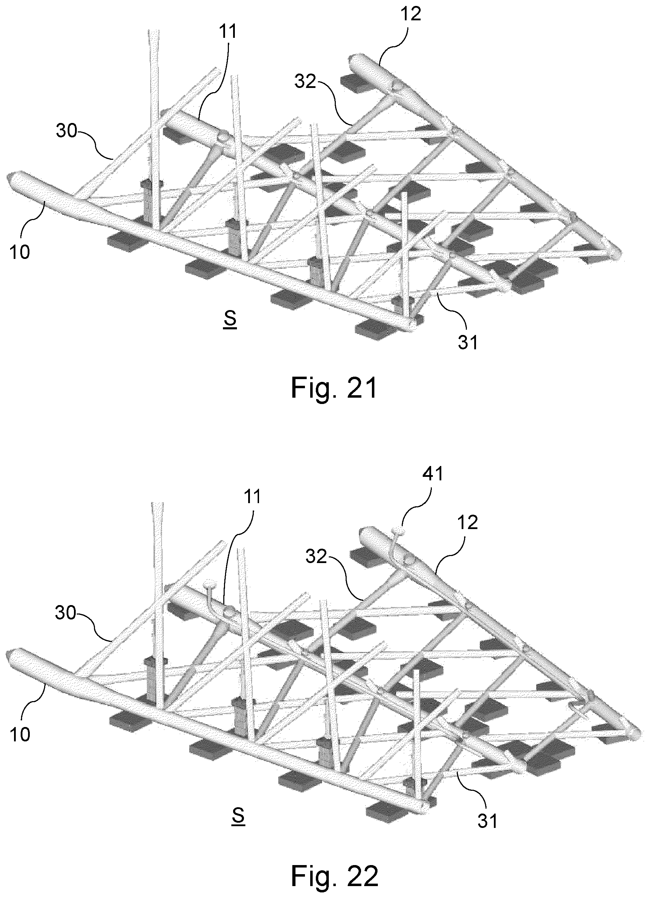

Illustrated in Fig. 21, second braces 31 are then laid out substantially horizontally adjacent the first leg section 10. In the illustrated example, the second leg section 11 is laid out prior to this step, such that the second braces 31 are positioned between the first and second leg sections 10,11. Alternatively, the second leg section 11 can be provided subsequent to laying out the second braces 31 adjacent the first leg section 10.

The second braces 32 are then fixed to the first and second leg sections 10,11, whereby the first leg section 10, the second leg section 11, the first braces 30 and the second braces 31 form a rigid, interconnected structural part.

A plurality of third braces 32 are laid out between the second and third leg sections 11,12. The third braces 32 may be laid out together with the first braces 30, as illustrated in Fig. 18, or at a later time. Similarly, the third leg section 12 may be laid out together with the first and/or second leg sections 10,11, or at a later time.

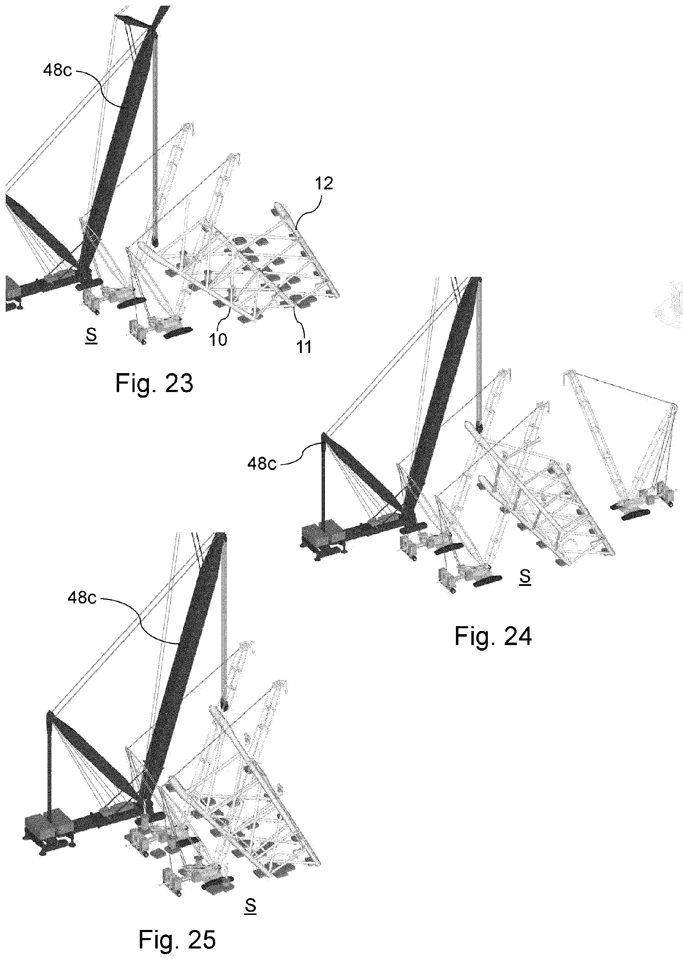

With the third braces 32 and the third leg section 12 laid out at the construction site S, the abovementioned interconnected structural part (i.e. the first leg section 10, the second leg section 11, the first braces 30 and the second braces 31) is pivoted about the second leg section 11 ("rolled up") to bring the first braces 30 into engagement with the third leg section 12. This is illustrated in Figs 23-25. This operation may be carried out with one or more cranes 48a-c, as illustrated.

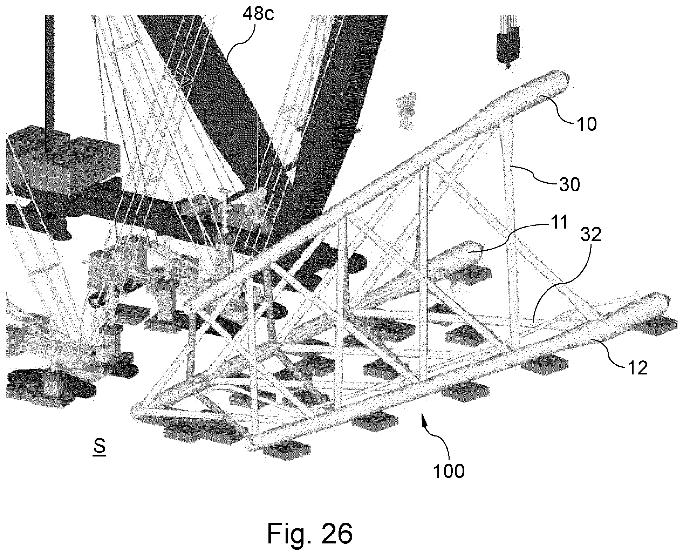

Fig. 26 illustrates the structure after the roll-up. The first braces 30 are then fixed to the third leg section 12, and the third braces 32 are fixed to the second leg section 11. The third braces 32 is also fixed to the third leg section 12; this may be done prior to roll-up (e.g. when the parts are arranged as illustrated in Fig. 21) or after roll-up, i.e. when as illustrated in Fig. 26.

In this manner, the leg sections 10,11,12 and the braces 30,31,32 are interconnected to form the jacket foundation 100.

Supports 24 (indicated in Fig. 17 but visible throughout) may be proved at the construction site S to support the structure and its individual parts during the steps described above.

Alternatively, instead of first fixing the first braces 30 to the first leg section 10 and pivoting the first braces 30 upwardly, as shown in Figs 18-19, the first and second braces 30,31 may be constructed directly as shown in Fig. 21. In this alternative the second braces 31 may be laid out horizontally and fixed to the first and second leg sections 10,11, and the first braces 30 may be positioned in the orientation as illustrated in Fig. 21, and fixed to the first leg section 10 while held and/or supported in that orientation.

Advantageously, the jacket foundation 100 may be constructed with substantial parts of the construction work being carried out at or from ground level. Particularly, welding operations between the braces 30,31,32 and the leg sections 10,11,12 may all be carried out at or from ground level.

A transition piece 40 (as described above but not illustrated in Figs 17-26) may subsequently be fixed to the first, second and third leg sections 10,11,12. The transition piece 40 can be provided with the jacket foundation 100 arranged as shown in Fig. 26, and otherwise in the same manner as described above. The jacket foundation 100 may thereafter be upended, also in the same manner as described above.

A pipe or cable structure 41, similarly as described above, may be arranged at the first, second or third leg section 10,11,12 and/or at the first, second or third braces 30,31,32. This is illustrated in Fig. 22. Advantageously, the pipe or cable structure 41 may be installed while the respective part(s) to which it is connected is(are) arranged horizontally, and before upending the jacket foundation 100. This allows the pipe or cable structure 41 to be installed at or from ground level.

In other aspects, there is provided a method of constructing a three-legged jacket foundation 100 for a wind power plant. The method comprises producing an elongate, three-legged foundation part having a substantially triangular cross-sectional shape in a horizontal plane, by means of first, second and third leg sections 10,11,12 interconnected by first, second and third braces 30,31,32. The first, second and third leg sections 10,11,12 and first, second and third braces 30,31,32 may, for example, be provided and fixed together (e.g. by welding) as described in the examples above, or by other methods. A transition piece 40 is subsequently fixed to the three-legged foundation part with the foundation part arranged horizontally at the construction site S.

In any of the examples or embodiments described or claimed herein, pairs of braces 30,31,32 may be offset about a longitudinal axis of the respective leg section 10,11,12. For example, braces 30,31,32 may extend outwardly from the respective leg section 10,11,12 with between 40 and 80 degrees angular offset, between 50 and 70 degrees angular offset, or about 60 degrees angular offset in the plane perpendicular to the longitudinal axis. With about 60 degrees offset between pairs of braces 30,31,32 at each leg section 10,11,12, the horizontal cross-section of the jacket foundation will resemble an equilateral triangle.

In any of the examples or embodiments described or claimed herein, the braces 30,31,32 may be formed by a plurality of beam members arranged in a common or substantially common plane. The braces 30,31,32 may, for example, comprise one or more X-shaped beam members. The two leg sections 10,11,12 to which the respective braces 30,31,32 is fixed may lay in the same common plane, such as to (together with the respective braces 30,31,32) form one of three sides of the jacket foundation 100.

In any of the examples or embodiments described or claimed herein, the leg sections 10,11,12 may have a circular or a polygonal horizontal cross-section profile.

In any of the examples or embodiments described or claimed herein, the step of fixing may be welding.

In any of the examples or embodiments described or claimed herein, any or all of the work platforms 42,43 may be a welding platform, optionally including a welding tent.

Any or all of the supports 20,21,23,24 can be on a floor of the construction site S. Optionally, the support(s) 20,21,23,24 can be integral with or made up by the floor of the construction site S.

Improved technology as described herein may be employed to reduce cost and for more effective use of existing facilities, equipment and supply chains. According to examples and embodiments described herein, more efficient use of equipment (such as cranes, work stations, scaffolding towers or other equipment) and/or workspace facilities can be achieved. Alternatively, or additionally, examples and embodiments described herein may be suitable to reduce the amount of work carried out at high elevations, improving safety and efficiency. Alternatively, or additionally, examples and embodiments described herein may provide increased operational flexibility, in that requirements for the construction site (for example relating to availability of special equipment) may be relaxed. In some implementations, "serial production" can be achieved, with efficient repeated use of the same equipment, facilities and personnel to produce a series of foundations 100. The invention is not limited by the embodiments described above; reference should be had to the appended claims, which define the invention.

## Claims

1. A method of constructing a jacket foundation (100) for a wind power plant, the method comprising:
- preparing a first part (1) by
providing a first leg section (10) and positioning the first leg section (10) at a plurality of first supports (20) at a construction site (S),
providing a second leg section (11) and positioning the second leg section (11) at a plurality of second supports (21) at the construction site (S), and
fixing a plurality of first braces (30) between the first and second leg sections (10,11); **characterised by**
- preparing a second part (2) by
providing a third leg section (12) and positioning the third leg section (12) on an elevated support structure (22,22a-d) at the construction site (S), and
fixing a plurality of second and third braces (31,32) to the third leg section (12), the second and third braces (31,32) extending from the third leg section (12) downwardly at opposite sides of the elevated support structure (22,22a-d);
- lifting the second part (2) off the elevated support structure (22,22a-d) and onto the first part (1), and
- connecting the first part (1) to the second part (2) by fixing the plurality of second braces (31) to the first leg section (10) and fixing the plurality of third braces (32) to the second leg section (11).

2. The method of claim 1, wherein the elevated support structure (22, 22a-d) is tapered such that an end of the third leg section (12) is angled downwards when supported on the elevated support structure (22, 22a-d).

3. The method of any preceding claim, comprising fixing a transition piece (40) to an end section (19) of the first and second parts (1,2), wherein the step of fixing the transition piece (40) to the end section (19) is carried out with the first leg section (10) positioned at the plurality of first supports (20) and the second leg section (11) positioned at the plurality of second supports (21).

4. The method of claim 3, wherein the step of fixing the transition piece (40) to the end section (19) comprises moving the transition piece (40) to a position directly adjacent and/or into contact with the end section (19) by means of at least one self-propelled modular transporter (25).

5. The method of any of claims 3 or 4, comprising:
providing the transition piece (40) to a position directly adjacent and/or into contact with the end section (19) with a work platform (42) fixed to the transition piece (40), and wherein
the step of fixing the transition piece (40) to the end section (19) is carried out at least partly from the work platform (42).

6. The method of claim 5, comprising fixing the transition piece (40) to the third leg section (12) from the work platform (42).

7. The method of any of claims 5 to 6, comprising subsequent to fixing the transition piece (40) to the end section (19) of the first and second parts (1,2), removing the work platform (42) from the transition piece (40).

8. The method of any of claims 3 to 7, comprising upending the jacket foundation (100) subsequent to the step of fixing the transition piece (40) to the end section (19).

9. The method of any preceding claim, wherein the elevated support structure (22,22a-d) comprises at least one work platform (43), and the step of fixing the plurality of second and third braces (31,32) to the third leg section (12) comprises fixing the plurality of second and third braces (31,32) to the third leg section (12) at least partly from the work platform (43).

10. The method of any preceding claim, wherein the step of fixing the plurality of second and third braces (31,32) to the third leg section (12) comprises resting the plurality of second and third braces (31,32) at a plurality of third supports (23) at the construction site (S) and against brace supports (12') at the third leg section (12) while fixing the plurality of second and third braces (31,32) to the third leg section (12).

11. The method of any preceding claim, comprising mounting a pipe or cable structure (41) to the first and/or second part (1,2) with the first and/or second part arranged horizontally.

12. The method of claim 11, comprising welding the pipe or cable structure (41) to the first and/or second part (1,2) at or from ground level.

13. The method of any preceding claim, comprising:
manufacturing at least one of the leg sections (10,11,12), braces (30,31,32), or the transition piece (40) at an indoor location (L) which is spaced from the construction site (S), and
moving the at least one of the leg sections (10,11,12), braces (30,31,32), or the transition piece (40) from the indoor location (L) to the construction site (S).

## Patentansprüche

1. Verfahren zum Konstruieren eines Mantelfundaments (100) für eine Windkraftanlage, wobei das Verfahren Folgendes umfasst:
- Vorbereiten eines ersten Teils (1) durch
Bereitstellen eines ersten Fußabschnitts (10) und Positionieren des ersten Fußabschnitts (10) an einer Vielzahl von ersten Stützen (20) auf einer Baustelle (S),
Bereitstellen eines zweiten Fußabschnitts (11) und Positionieren des zweiten Fußabschnitts (11) an einer Vielzahl von zweiten Stützen (21) auf der Baustelle (S) und
Befestigen einer Vielzahl von ersten Streben (30) zwischen dem ersten und dem zweiten Fußabschnitt (10, 11); **gekennzeichnet durch**
- Vorbereiten eines zweiten Teils (2) durch
Bereitstellen eines dritten Fußabschnitts (12) und Positionieren des dritten Fußabschnitts (12) auf einer erhöhten Stützstruktur (22, 22a-d) auf der Baustelle (S) und
Befestigen einer Vielzahl von zweiten und dritten Streben (31, 32) an dem dritten Fußabschnitt (12), wobei sich die zweite und die dritte Strebe (31, 32) von dem dritten Fußabschnitt (12) an gegenüberliegenden Seiten der erhöhten Stützstruktur (22, 22a-d) nach unten erstrecken;
- Abheben des zweiten Teils (2) von der erhöhten Stützstruktur (22, 22a-d) und auf den ersten Teil (1) und
- Verbinden des ersten Teils (1) mit dem zweiten Teil (2) durch Befestigen der Vielzahl von zweiten Streben (31) an dem ersten Fußabschnitt (10) und Befestigen der Vielzahl von dritten Streben (32) an dem zweiten Fußabschnitt (11).

2. Verfahren nach Anspruch 1, wobei die erhöhte Stützstruktur (22, 22a-d) derart verjüngt ist, dass ein Ende des dritten Fußabschnitts (12) nach unten abgewinkelt ist, wenn er auf der erhöhten Stützstruktur (22, 22a-d) gestützt ist.

3. Verfahren nach einem vorhergehenden Anspruch, umfassend Befestigen eines Übergangsstücks (40) an einem Endabschnitt (19) des ersten und des zweiten Teils (1, 2), wobei der Schritt des Befestigens des Übergangsstücks (40) an dem Endabschnitt (19) durchgeführt wird, wobei der erste Fußabschnitt (10) an der Vielzahl von ersten Stützen (20) positioniert ist und der zweite Fußabschnitt (11) an der Vielzahl von zweiten Stützen (21) positioniert ist.

4. Verfahren nach Anspruch 3, wobei der Schritt des Befestigens des Übergangsstücks (40) an dem Endabschnitt (19) Bewegen des Übergangsstücks (40) in eine Position direkt benachbart zu und/oder in Kontakt mit dem Endabschnitt (19) mittels mindestens eines Modulfahrzeugs mit eigenem Antrieb (25) umfasst.

5. Verfahren nach einem der Ansprüche 3 oder 4, umfassend:
Bereitstellen des Übergangsstücks (40) an einer Position direkt benachbart zu und/oder in Kontakt mit dem Endabschnitt (19) mit einer an dem Übergangsstück (40) befestigten Arbeitsbühne (42), und wobei
der Schritt des Befestigens des Übergangsstücks (40) an dem Endabschnitt (19) mindestens teilweise von der Arbeitsbühne (42) aus durchgeführt wird.

6. Verfahren nach Anspruch 5, umfassend Befestigen des Übergangsstücks (40) an dem dritten Fußabschnitt (12) von der Arbeitsbühne (42) aus.

7. Verfahren nach einem der Ansprüche 5 bis 6, umfassend anschließend an das Befestigen des Übergangsstücks (40) an dem Endabschnitt (19) des ersten und des zweiten Teils (1, 2), Entfernen der Arbeitsbühne (42) von dem Übergangsstück (40).

8. Verfahren nach einem der Ansprüche 3 bis 7, umfassend Aufrichten des Mantelfundaments (100) anschließend an den Schritt des Befestigens des Übergangsstücks (40) an dem Endabschnitt (19).

9. Verfahren nach einem vorhergehenden Anspruch, wobei die erhöhte Stützstruktur (22, 22a-d) mindestens eine Arbeitsbühne (43) umfasst und der Schritt des Befestigens der Vielzahl von zweiten und dritten Streben (31, 32) an dem dritten Fußabschnitt (12) Befestigen der Vielzahl von zweiten und dritten Streben (31, 32) an dem dritten Fußabschnitt (12) mindestens teilweise von der Arbeitsbühne (43) aus umfasst.

10. Verfahren nach einem vorhergehenden Anspruch, wobei der Schritt des Befestigens der Vielzahl von zweiten und dritten Streben (31, 32) an dem dritten Fußabschnitt (12) Anlegen der Vielzahl von zweiten und dritten Streben (31, 32) an einer Vielzahl von dritten Stützen (23) auf der Baustelle (S) und gegen Strebenstützen (12') an dem dritten Fußabschnitt (12) umfasst, während die Vielzahl von zweiten und dritten Streben (31, 32) an dem dritten Fußabschnitt (12) befestigt wird.

11. Verfahren nach einem vorhergehenden Anspruch, umfassend Montieren einer Rohr- oder Kabelstruktur (41) an dem ersten und/oder zweiten Teil (1, 2), wobei der erste und/oder der zweite Teil horizontal angeordnet ist/sind.

12. Verfahren nach Anspruch 11, umfassend Schweißen der Rohr- oder Kabelstruktur (41) an den ersten und/oder den zweiten Teil (1, 2) auf oder von der Bodenebene aus.

13. Verfahren nach einem vorhergehenden Anspruch, umfassend:
Herstellen mindestens eines der Fußabschnitte (10, 11, 12), der Streben (30, 31, 32) oder des Übergangsstücks (40) an einem Innenstandort (L), der von der Baustelle (S) beabstandet ist, und
Bewegen des mindestens einen der Fußabschnitte (10, 11, 12), der Streben (30, 31, 32) oder des Übergangsstücks (40) von dem Innenstandort (L) zu der Baustelle (S).

## Revendications

1. Procédé de construction d'une fondation à chemise (100) pour une centrale éolienne, le procédé comprenant :
- la préparation d'une première pièce (1) par
la fourniture d'une première section de jambe (10) et le positionnement de la première section de jambe (10) au niveau d'une pluralité de premiers supports (20) au niveau d'un chantier de construction (S),
la fourniture d'une deuxième section de jambe (11) et le positionnement de la deuxième section de jambe (11) au niveau d'une pluralité de deuxièmes supports (21) au niveau du chantier de construction (S), et
la fixation d'une pluralité de premières entretoises (30) entre les première et deuxième sections de jambe (10, 11) ; **caractérisé par**
- la préparation d'une seconde pièce (2) par
la fourniture d'une troisième section de jambe (12) et le positionnement de la troisième section de jambe (12) sur une structure de support surélevée (22, 22a-d) au niveau du chantier de construction (S), et
la fixation d'une pluralité de deuxièmes et troisièmes entretoises (31, 32) à la troisième section de jambe (12), les deuxièmes et troisièmes entretoises (31, 32) s'étendant à partir de la troisième section de jambe (12) vers le bas au niveau de côtés opposés de la structure de support surélevée (22, 22a-d) ;
- le levage de la seconde pièce (2) à partir de la structure de support surélevée (22, 22a-d) et sur la première pièce (1), et
- la liaison de la première pièce (1) à la seconde pièce (2) en fixant la pluralité de deuxièmes entretoises (31) à la première section de jambe (10) et en fixant la pluralité de troisièmes entretoises (32) à la deuxième section de jambe (11).

2. Procédé de la revendication 1, dans lequel la structure de support surélevée (22, 22a-d) est effilée de sorte qu'une extrémité de la troisième section de jambe (12) soit inclinée vers le bas lorsqu'elle est supportée sur la structure de support surélevée (22, 22a-d).

3. Procédé d'une quelconque revendication précédente, comprenant la fixation d'un élément de transition (40) à une section d'extrémité (19) des première et seconde pièces (1, 2), dans lequel l'étape de fixation de l'élément de transition (40) à la section d'extrémité (19) est réalisée avec la première section de jambe (10) positionnée au niveau de la pluralité de premiers supports (20) et la deuxième section de jambe (11) positionnée au niveau de la pluralité de deuxièmes supports (21).

4. Procédé de la revendication 3, dans lequel l'étape de fixation de l'élément de transition (40) à la section d'extrémité (19) comprend le déplacement de l'élément de transition (40) à une position directement adjacente et/ou en contact avec la section d'extrémité (19) au moyen d'au moins un transporteur modulaire automoteur (25).

5. Procédé de l'une quelconque des revendications 3 ou 4, comprenant :
la fourniture de l'élément de transition (40) à une position directement adjacente et/ou en contact avec la section d'extrémité (19) avec une plate-forme de travail (42) fixée à l'élément de transition (40), et dans lequel
l'étape de fixation de l'élément de transition (40) à la section d'extrémité (19) est réalisée au moins en partie à partir de la plate-forme de travail (42).

6. Procédé de la revendication 5, comprenant la fixation de l'élément de transition (40) à la troisième section de jambe (12) à partir de la plate-forme de travail (42).

7. Procédé de l'une quelconque des revendications 5 à 6, comprenant, après la fixation de l'élément de transition (40) à la section d'extrémité (19) des première et seconde pièces (1, 2), le retrait de la plate-forme de travail (42) de l'élément de transition (40).

8. Procédé de l'une quelconque des revendications 3 à 7, comprenant le renversement de la fondation à chemise (100) après l'étape de fixation de l'élément de transition (40) à la section d'extrémité (19).

9. Procédé d'une quelconque revendication précédente, dans lequel la structure de support surélevée (22, 22a-d) comprend au moins une plate-forme de travail (43), et l'étape de fixation de la pluralité de deuxièmes et troisièmes entretoises (31, 32) à la troisième section de jambe (12) comprend la fixation de la pluralité de deuxièmes et troisièmes entretoises (31, 32) à la troisième section de jambe (12) au moins en partie à partir de la plate-forme de travail (43).

10. Procédé d'une quelconque revendication précédente, dans lequel l'étape de fixation de la pluralité de deuxièmes et troisièmes entretoises (31, 32) à la troisième section de jambe (12) comprend le repos de la pluralité de deuxièmes et troisièmes entretoises (31, 32) au niveau d'une pluralité de troisièmes supports (23) au niveau du chantier de construction (S) et contre des supports d'entretoise (12') au niveau de la troisième section de jambe (12) tout en fixant la pluralité de deuxièmes et troisièmes entretoises (31, 32) à la troisième section de jambe (12).

11. Procédé d'une quelconque revendication précédente, comprenant le montage d'une structure de tuyau ou de câble (41) sur la première et/ou la seconde pièce (1, 2), la première et/ou la seconde pièce étant agencée horizontalement.

12. Procédé de la revendication 11, comprenant le soudage de la structure de tuyau ou de câble (41) à la première et/ou à la seconde pièce (1, 2) au niveau du sol ou à partir de celui-ci.

13. Procédé d'une quelconque revendication précédente, comprenant :
la fabrication d'au moins l'un des sections de jambe (10, 11, 12), des entretoises (30, 31, 32) ou de l'élément de transition (40) au niveau d'un emplacement intérieur (L) qui est espacé du chantier de construction (S), et
le déplacement de l'au moins un des sections de jambe (10, 11, 12), des entretoises (30, 31, 32) ou de l'élément de transition (40) à partir de l'emplacement intérieur (L) au chantier de construction (S).
